# DEMANDE DE BREVET EUROPEEN

(11) **EP 4 806 619 A1**
(43) Date de publication de la demande: **16.09.2026**
(21) Numéro de dépôt: 25224204.5
(22) Date de dépôt: 17.12.2025
(51) Int. Cl.: B29C 49/00, B29C 45/72, B29C 45/26, B29C 45/33, B29C 49/08, B29C 49/12, B29C 49/64, B29C 49/02, B29K 67/00, B29L 31/00, B29C 49/48, B29C 49/58, B29K 105/26, B29K 105/00

(54) **PRÉFORME POUR RÉCIPIENT EN MATIÈRE PLASTIQUE**

(30) Priorité: 15.03.2025 FR 2502623
(71) Demandeur: Sidel Participations, 76930 Octeville-sur-Mer (FR)
(72) Inventeur: LETESTU, Mickael, 76930 OCTEVILLE-SUR-MER (FR)
(74) Mandataire: Sidel Group

(57) **Abrégé**

La présente invention concerne une préforme (1) pour la fabrication de récipients par étirage-soufflage, en matière plastique, comprenant au moins un corps (2) symétrique de révolution autour d'un axe (X) central vertical, ledit corps (2) comportant une paroi externe et une paroi interne, la distance radiale entre la paroi externe et la paroi interne définissant une épaisseur de paroi, un col (3) ouvert qui s'étend dans le prolongement du corps (2) à partir d'une extrémité supérieure de celui-ci, ledit col (3) étant séparé du corps (2) par une collerette (4) annulaire, et un fond (5) qui ferme le corps (2) à partir d'une extrémité (6) inférieure de ce dernier, ledit fond (5) étant symétrique de révolution autour de l'axe (X) central, et ledit corps (2) comportant, sur une hauteur dite de cône Hc depuis la collerette (4) annulaire en direction du fond (5), une paroi externe conique et/ou une paroi interne conique, **caractérisé e** en ce que ladite paroi externe conique et/ou ladite paroi interne conique comporte, sur tout ou partie de ladite hauteur de cône Hc, des moyens (7) aptes à diminuer l'intensité du rayon réfracté et/ou à modifier l'angle dudit rayon réfracté, la source de rayonnement incident étant extérieure à ladite préforme (1).

## Description

### Domaine technique

La présente invention a trait à a fabrication des récipients à partir de préformes en matière plastique, notamment en polytéréphtalate d'éthylène (PET) et ou en polytéréphtalate d'éthylène recyclé (rPET). Plus précisément, l'invention concerne une préforme destinée au formage d'un récipient par soufflage ou étirage soufflage, au sein d'un moule à l'empreinte du récipient ou de manière libre (c'est-à-dire en l'absence de moule).

### Etat de la technique

Il est bien connu qu'un récipient comprend ordinairement une paroi latérale généralement symétrique de révolution qui s'étend suivant un axe central, un col qui s'étend dans le prolongement de la paroi latérale et par lequel le récipient est destiné à être rempli et vidé, et un fond qui s'étend transversalement à partir d'une extrémité inférieure du corps et par lequel le récipient est destiné à reposer sur une surface plane.

Par ailleurs, une préforme comprend ordinairement un corps de forme sensiblement cylindrique (destiné à former la paroi latérale du récipient), un col ouvert qui s'étend dans le prolongement du corps à partir d'une extrémité supérieure de celui-ci, et dont il est séparé par une collerette (le col demeure inchangé au cours du processus de formage du récipient), ainsi qu'un fond qui ferme le corps à une extrémité inférieure de celui-ci (et destiné à former le fond du récipient).

Pour former le récipient à partir de la préforme, on commence par chauffer le corps et le fond de la préforme à une température supérieure à la température de transition vitreuse de la matière (qui, pour le PET, est d'environ 80°C). On injecte ensuite un fluide (typiquement de l'air) sous pression dans la préforme, dont le corps subit une inflation à la fois axiale et radiale jusqu'à parvenir à la forme souhaitée pour le corps du récipient. Généralement, l'expansion axiale est réalisée par un étirage à l'aide d'une tige.

Ladite chauffe est généralement conduite dans une unité de chauffe (également appelée four) équipée d'une pluralité de sources de rayonnement infrarouge auxquelles sont exposées les préformes. Ces sources sont en général des lampes halogènes, qui rayonnent sur un spectre assez large incluant l'infrarouge court (et éventuellement une partie de l'infrarouge moyen) ainsi qu'une partie au moins du spectre visible. Les lampes halogènes ont comme principaux défauts une directivité faible (voire inexistante) et une durée de vie relativement courte.

Afin de pallier ces inconvénients, la demanderesse a développé une technologie de chauffe alternative basée sur l'utilisation de sources de rayonnement monochromatique (ou quasi-monochromatique), qui offrent une meilleure directivité et une plus grande longévité, cf. par ex. la demande de brevet européen EP 2 720 842 (Sidel Participations), qui décrit un procédé de chauffe de préformes au moyen d'une matrice de diodes laser de type à cavité verticale émettant par la surface (VCSEL).

De nombreux tests de cette nouvelle technologie dite four laser, conduits sur des préformes de toutes formes et de toutes dimensions, ont montré dans les préformes l'existence de zones de surchauffe de la matière, dont un réglage même fin de la distribution énergétique des sources, i.e. des diodes laser, ne permet pas de s'affranchir. Ainsi, il est apparu qu'il convenait de retravailler la silhouette et le dimensionnement des préformes.

A cet égard, la demanderesse a déjà proposé une préforme qui, lorsqu'exposée à un rayonnement infrarouge monochromatique ou quasi- monochromatique, peut être chauffée de manière relativement homogène, c'est-à-dire sans présenter de zones de surchauffe locale non désirée. Une telle préforme adaptée à un four laser est décrit notamment dans le document WO2017/103372A1 déposé par la demanderesse.

Ledit document WO2017/103372A1 décrit une préforme de récipient en matière plastique, qui comprend un corps symétrique de révolution autour d'un axe central ; un col ouvert qui s'étend dans le prolongement du corps dont il est séparé par une collerette en saillie radiale ; un fond qui ferme le corps à l'opposé du col ; dans laquelle le corps présente une portion concave en section axiale et dans laquelle : B≤ 0.9 A et 0.5 C < C' < 0.95 C où A est le diamètre hors tout du corps, mesuré sous la collerette ; B est le diamètre externe du fond, mesuré à sa jonction avec le corps ; C est la hauteur cumulée du corps et du fond, mesurée à partir de la collerette ; C' est la hauteur, mesurée axialement, de la portion concave du corps, et la portion concave présente, en section axiale, sur une face externe, un rayon RE de courbure externe tel que 1.5 C ≤ RE ≤ 10 C.

Ces caractéristiques contribuent à minimiser la réfraction dans la matière, au bénéfice d'une meilleure qualité de chauffe.

Toutefois, ces préformes ne permettent pas de procurer une distribution de la matière satisfaisante pour tous les formats de récipients, de permettre in fine un allègement des récipients fabriqués à partir de ces préformes tout en procurant une bonne qualité desdits récipients notamment.

Par ailleurs, de manière générale, la technologie de chauffe au moyen d'un four laser, bien que permettant de souffler de bonnes bouteilles avec des préformes du marché au design « standard », peut être impactée par des facteurs de formes couramment utilisés dans la définition des préformes tels que par exemple les formes coniques, les variations brutales d'épaisseur et les formes de dômes.

En effet, ces formes des préformes perturbent le rayonnement infrarouge monochromatique ou quasi-monochromatique du four laser ainsi que la localisation sur les préformes de la chauffe et, in fine, impactent le processus de fabrication des bouteilles conduisant potentiellement à une diminution de la qualité des bouteilles.

### Divulgation de l'invention

L'un des buts de l'invention est donc de remédier à tout ou partie de ces inconvénients en proposant une préforme de conception simple et peu onéreuse particulièrement adaptée à un chauffage par un four laser et procurant une meilleure distribution de la matière pour tous les formats de récipients, permettant un allègement des récipients fabriqués à partir de cette préforme tout en procurant une bonne qualité desdits récipients notamment.

A cet effet, et conformément à l'invention, il est proposé une préforme pour la fabrication de récipients par étirage-soufflage, en matière plastique, comprenant au moins un corps symétrique de révolution autour d'un axe (X) central vertical, ledit corps comportant une paroi externe et une paroi interne, la distance radiale entre la paroi externe et la paroi interne définissant une épaisseur de paroi, un col ouvert qui s'étend dans le prolongement du corps à partir d'une extrémité supérieure de celui-ci, ledit col étant séparé du corps par une collerette annulaire, et un fond qui ferme le corps à partir d'une extrémité inférieure de ce dernier, ledit fond étant symétrique de révolution autour de l'axe (X) central, et ledit corps comportant, sur une hauteur dite de cône Hc depuis la collerette annulaire en direction du fond, une paroi externe conique et/ou une paroi interne conique ; ladite préforme est remarquableen ce que ladite paroi externe conique et/ou ladite paroi interne conique comporte, sur tout ou partie de ladite hauteur de cône Hc, des moyens aptes à diminuer l'intensité du rayon réfracté et/ou à modifier l'angle dudit rayon réfracté, la source de rayonnement incident étant extérieure à ladite préforme.

De préférence, lesdits moyens aptes à diminuer le rayonnement réfracté et/ou modifier l'angle du rayon réfracté consistent en au moins un état de surface de la paroi externe conique et/ou de la paroi interne conique.

Selon un premier mode de réalisation, ledit état de surface de la paroi externe conique et/ou de la paroi interne conique consiste en une surface dépolie de la paroi externe conique et/ou de la paroi interne conique.

De préférence, la surface dépolie de la paroi externe conique et/ou de la paroi interne conique présente une rugosité comprise entre 0,1 et 1,5 µm.

Selon un second mode de réalisation, ledit état de surface de la paroi externe conique et/ou de la paroi interne conique consiste en une surface à échelons de la paroi externe conique et/ou de la paroi interne conique, chaque échelon comportant deux segments.

De préférence, chaque échelon comporte deux segments s'étendant sensiblement perpendiculairement l'un par rapport à l'autre.

Par ailleurs, chaque échelon comporte deux segments s'étendant sensiblement perpendiculairement l'un par rapport à l'autre, un premier segment s'étendant sensiblement perpendiculairement à l'axe de révolution de la préforme et un second segment s'étendant sensiblement parallèlement à l'axe de révolution.

De plus, chaque segment de chaque échelon est plan.

De manière alternative, au moins un segment de chaque échelon est concave ou convexe.

Selon un autre mode de réalisation, ledit état de surface de la paroi externe conique et/ou de la paroi interne conique consiste en une surface dépolie de la paroi externe conique et/ou de la paroi interne conique et une surface à échelons de la paroi externe conique et/ou de la paroi interne conique.

De préférence, les moyens aptes à diminuer l'intensité du rayon réfracté et/ou à modifier l'angle dudit rayon réfracté de ladite paroi externe conique et/ou ladite paroi interne conique s'étendent sur toute la hauteur de cône Hc.

Un autre objet de l'invention concerne un procédé de fabrication d'un récipient par soufflage ou par étirage-soufflage comprenant au moins les étapes suivantes de : fourniture d'une préforme selon l'invention ; chauffe du corps de la préforme par exposition à un rayonnement infrarouge monochromatique ou quasi-monochromatique d'intensité prédéterminée ; et formage du récipient par injection d'un fluide sous pression dans la préforme ainsi préalablement chauffée.

Par ailleurs, le procédé comprend, entre l'étape de chauffe et l'étape de formage, une étape d'introduction de la préforme dans un moule à l'empreinte du récipient.

Un dernier objet de l'invention concerne un moule pour le formage d'une préforme selon l'invention comprenant un corps de moule ayant une paroi latérale à l'empreinte d'une face externe du corps de la préforme et un fond de moule à l'empreinte d'une face externe du fond de la préforme et un noyau à l'empreinte d'une face interne de la préforme.

### Brève description des dessins

D'autres avantages et caractéristiques ressortiront mieux de la description qui va suivre d'une unique variante d'exécution, donnée à titre d'exemple non limitatif, de la préforme conforme à l'invention, en référence aux dessins annexés sur lesquels :
[Fig.1] est une vue en coupe en élévation d'une préforme suivant l'invention pour la fabrication d'un récipient,
[Fig.2] est une représentation schématique de la paroi interne du corps d'une préforme, au niveau d'une portion tronconique dudit corps de la préforme, munie de moyens aptes à diminuer l'intensité du rayon réfracté,
[Fig.3] est une représentation schématique de la paroi interne du corps d'une préforme, au niveau d'une portion tronconique dudit corps de la préforme, munie de moyens aptes à modifier l'angle rayon réfracté,
[Fig.4] est une vue en coupe en élévation d'une variante d'exécution de la préforme suivant l'invention pour la fabrication d'un récipient,
[Fig.5] est une représentation schématique illustrant la fabrication d'un récipient à partir d'une préforme suivant l'invention,
[Fig.6] est une vue en coupe d'un moule permettant de former la préforme suivant l'invention.

### Mode de réalisation de l'invention

Dans la suite de la description, les mêmes références numériques désignent les mêmes éléments. Par ailleurs, les différentes vues ne sont pas nécessairement tracées à l'échelle

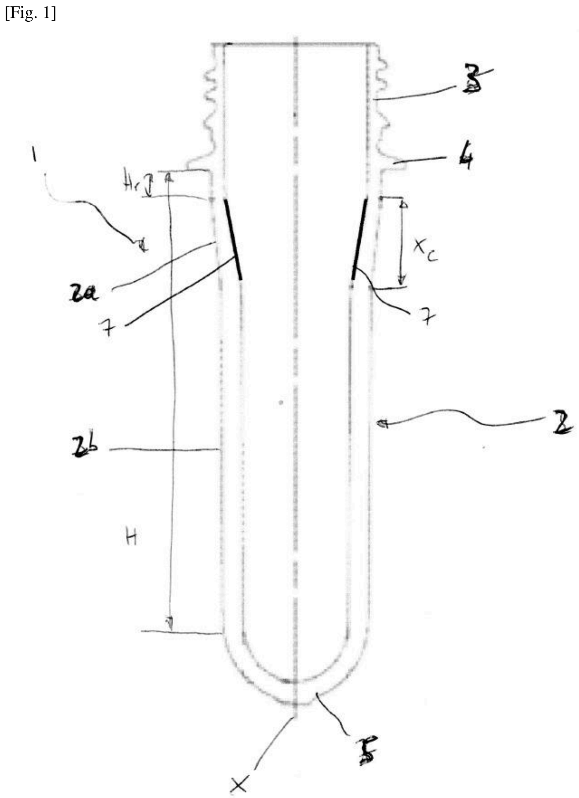

Sur la [Fig.1] est représentée une préforme 1 en matière plastique tel que PET (polytéréphtalate d'éthylène) et/ou du rPET (polytéréphtalate d'éthylène recyclé), à partir de laquelle un récipient est destiné à être formé par soufflage ou étirage soufflage.

Chaque préforme 1 comprend, en premier lieu, un corps 2 qui s'étend de manière symétrique de révolution autour d'un axe X central, ledit corps 2 de la préforme 1 étant destiné à former un corps et une épaule du récipient.

Chaque préforme 1 comprend, en deuxième lieu, un col 3 ouvert qui s'étend dans le prolongement du corps 2 à partir d'une extrémité supérieure de celui-ci. Le col 3 présente sa forme finale, qu'il est destiné à conserver tout au long du formage et de la vie du récipient.

Le col 3 est avantageusement séparé du corps 2 par une collerette 4 en saillie radiale, par laquelle la préforme 1 (puis le récipient) est suspendue (ou plus généralement tenue) pendant diverses opérations de convoyage, de chauffe de la préforme 1 ou de formage du récipient, puis, respectivement, de remplissage, bouchage et étiquetage de ce dernier.

Chaque préforme 1 comprend, en troisième lieu, un fond 5 qui ferme le corps 2 à partir d'une extrémité 6 inférieure de celui-ci, c'est-à-dire que la matière du fond 5 s'étend à partir de l'extrémité 6 inférieure du corps 2 pour venir rejoindre radialement l'axe X central et fermer ainsi la préforme 1 à l'opposé du col 3. Le fond 5 est symétrique de révolution autour de l'axe X central, c'est-à-dire qu'il est invariant dans tout plan de coupe longitudinale (autrement dit passant par l'axe X central).

Ainsi, ladite préforme suivant l'invention pour la fabrication de récipients par étirage-soufflage, en matière plastique, comprenant au moins un corps symétrique de révolution autour d'un axe (X) central vertical, ledit corps comportant une paroi externe et une paroi interne, la distance radiale entre la paroi externe et la paroi interne définissant une épaisseur de paroi, un col ouvert qui s'étend dans le prolongement du corps à partir d'une extrémité supérieure de celui-ci, ledit col étant séparé du corps par une collerette annulaire, et un fond qui ferme le corps à partir d'une extrémité inférieure de ce dernier, ledit fond étant symétrique de révolution autour de l'axe (X) central.

Ledit corps comporte une première portion dite supérieure tronconique 2a, sur une hauteur dite de cône Hc depuis la collerette 4 en direction du fond 5, et une seconde portion dite inférieure sensiblement cylindrique 2b depuis l'extrémité inférieure de la portion supérieure tronconique 2a jusqu'au fond 5 de la préforme 1.

Ladite paroi interne conique, i.e. la paroi interne du corps 2 au niveau de la portion supérieure tronconique 2a, comporte des moyens 7 aptes à diminuer l'intensité du rayon réfracté et/ou à modifier l'angle dudit rayon réfracté, la source de rayonnement incident étant extérieure à ladite préforme 1, ladite source de rayonnement incident n'étant pas représentée sur la [Fig.1] et lesdits moyens 7 étant schématiquement représentés par un traits plus épais.

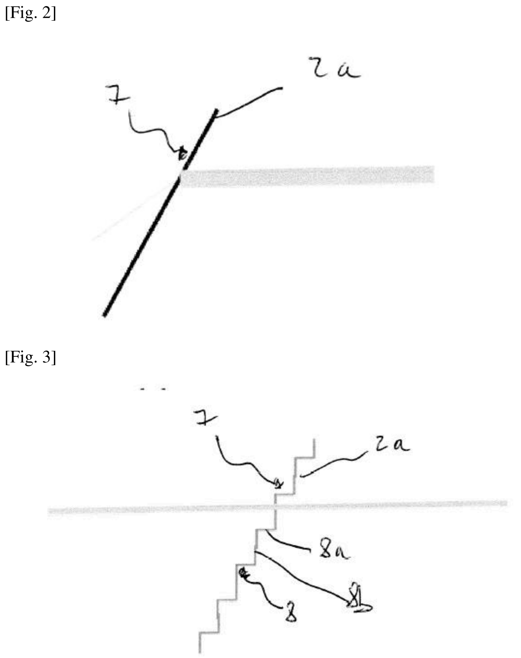

Selon un premier mode de réalisation, en référence aux figures 1 et 2, lesdits moyens 7 consistent en au moins un état de surface de la paroi interne conique apte à diminuer le rayonnement réfracté. Dans cet exemple particulier de réalisation, ledit état de surface 7 consiste en une surface dépolie de ladite paroi interne conique.

De préférence, ladite surface dépolie de la paroi interne conique présente une rugosité comprise entre 0,1 et 1,5 µm. Par ailleurs, ladite surface dépolie de la paroi interne conique pourra être obtenu par tout procédé chimique, par exemple par application d'un acide, et/ou mécanique tel que par sablage par exemple, bien connu de l'homme du métier.

De plus, dans cet exemple particulier de réalisation, les moyens 7 aptes à diminuer l'intensité du rayon réfracté, en l'espèce ladite surface dépolie, de ladite paroi interne conique s'étendent sur toute la hauteur de cône Hc ; Toutefois, il est bien évident que lesdits moyens 7 pourront s'étendre uniquement sur une partie de la dite hauteur Hc, en continu ou non, sans pour autant sortir du cadre de l'invention.

Il va de soi que la surface dépolie 7 pourra être substituée par tous autres moyens aptes diminuer l'intensité du rayon réfracté sans pour autant sortir du cadre de l'invention.

Selon un second mode de réalisation, en référence aux figures 1 et 3, lesdits moyens 7 consistent en au moins un état de surface de la paroi interne conique à modifier l'angle dudit rayon réfracté de ladite paroi interne conique. Dans cet exemple particulier de réalisation, ledit état de surface 7 consiste en une surface à échelons 8 de la paroi interne conique, chaque échelon 8 comportant deux segments 8a et 8b.

Plus particulièrement, dans cet exemple particulier de réalisation, chaque échelon 8 comporte deux segments 8a et 8b s'étendant sensiblement perpendiculairement l'un par rapport à l'autre, un premier segment 8a s'étendant sensiblement perpendiculairement à l'axe X de révolution de la préforme 1 et un second segment 8b s'étendant sensiblement parallèlement à l'axe de révolution, que segment 8a,8b de chaque échelon 8 étant plan.

Il est bien évident que lesdits segments 8a et 8b de chaque échelon 8 pourront ne pas s'étendre perpendiculairement l'un par rapport à l'autre et/ou ne pas s'étendre perpendiculairement et respectivement perpendiculairement à l'axe X de révolution de la préforme sans pour autant sortir du cadre de l'invention.

Par ailleurs, il va de soi qu'au moins un segment de chaque échelon 8 pourra être concave ou convexe sans pour autant sortir du cadre de l'invention.

De plus, dans cet exemple particulier de réalisation, les moyens 7 aptes à modifier l'angle dudit rayon réfracté de ladite paroi interne conique s'étendent sur toute la hauteur de cône Hc ; Toutefois, il est bien évident que lesdits moyens 7 pourront s'étendre uniquement sur une partie de la dite hauteur Hc, en continu ou non, sans pour autant sortir du cadre de l'invention.

Il va de soi que la surface à échelons 8 de la paroi interne conique, qui est similaire à une lentille de Fresnel, pourra être substituée par tous moyens aptes à modifier l'angle dudit rayon réfracté sans pour autant sortir du cadre de l'invention.

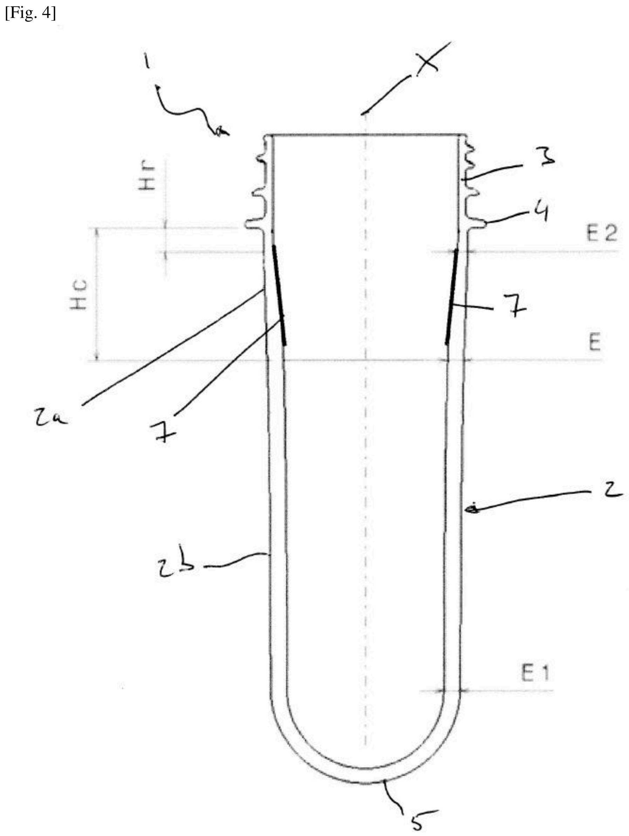

Selon une variante d'exécution de la préforme 1 suivant l'invention, en référence à la [Fig.4], ladite préforme 1 étant en matière plastique tel que PET (polytéréphtalate d'éthylène) et/ou du rPET (polytéréphtalate d'éthylène recyclé), et étant destiné à la fabrication d'un récipient formé par soufflage ou étirage soufflage, chaque préforme 1 comprend, de la même manière que précédemment, en premier lieu, un corps 2 qui s'étend de manière symétrique de révolution autour d'un axe X central. Selon un mode avantageux convenant à la plupart des applications, le corps 2 est sensiblement cylindrique.

Chaque préforme 1 comprend, en deuxième lieu, un col 3 ouvert qui s'étend dans le prolongement du corps 2 à partir d'une extrémité supérieure de celui-ci. Le col 3 présente sa forme finale, qu'il est destiné à conserver tout au long du formage et de la vie du récipient.

Le col 3 est avantageusement séparé du corps 2 par une collerette 4 en saillie radiale, par laquelle la préforme 1 (puis le récipient) est suspendue (ou plus généralement tenue) pendant diverses opérations de convoyage, de chauffe de la préforme 1 ou de formage du récipient, puis, respectivement, de remplissage, bouchage et étiquetage de ce dernier.

Chaque préforme 1 comprend, en troisième lieu, un fond 5 qui ferme le corps 2 à partir d'une extrémité 6 inférieure de celui-ci, c'est-à-dire que la matière du fond 5 s'étend à partir de l'extrémité 6 inférieure du corps 3 (sensiblement cylindrique) pour venir rejoindre radialement l'axe X central et fermer ainsi la préforme 1 à l'opposé du col 3. Le fond 5 est symétrique de révolution autour de l'axe X central, c'est-à-dire qu'il est invariant dans tout plan de coupe longitudinale (autrement dit passant par l'axe X central).

Ainsi, ladite préforme 1 suivant l'invention pour la fabrication de récipients par étirage-soufflage, en matière plastique, comprend au moins un corps 2 symétrique de révolution autour d'un axe (X) central vertical, ledit corps 2 comportant une paroi externe et une paroi interne, la distance radiale entre la paroi externe et la paroi interne définissant une épaisseur de paroi.

Ledit corps 2 présente une forme sensiblement cylindrique dont l'épaisseur de la paroi est croissante depuis la collerette, l'épaisseur de la paroi du corps sous la collerette étant égale à E2 à une hauteur dite de référence sous col Hr, en direction du fond 5 sur une hauteur dite de cône Hc, l'épaisseur de la paroi du corps 2 à ladite hauteur de cône Hc étant égale à E et l'épaisseur de la paroi du corps à l'extrémité inférieure dudit corps étant égale à E1.

Ladite préforme 1 se distingue de celle précédemment décrite par le fait que, sur la hauteur de cône Hc, le diamètre externe moyen du corps 2 est constant depuis la collerette 4 en direction de l'extrémité inférieure 6 du corps 2 et le diamètre interne moyen est décroissant depuis la collerette 4 en direction de l'extrémité inférieure 6 du corps 2, procurant ainsi une forme tronconique de la paroi interne du corps 2 sur ladite hauteur Hc.

Accessoirement, le fond 5 de la préforme 1 présente une forme sensiblement hémisphérique. Toutefois, il va de soi que le fond 5 de la préforme pourra présenter une forme quelconque sans pour autant sortir du cadre de l'invention.

Ledit corps comporte une première portion dite supérieure tronconique 2a, sur une hauteur dite de cône Hc depuis la collerette 4 en direction du fond 5, et une seconde portion dite inférieure sensiblement cylindrique 2b depuis l'extrémité inférieure de la portion supérieure tronconique 2a jusqu'au fond 5 de la préforme 1.

Ladite paroi interne conique, i.e. la paroi interne du corps 2 au niveau de la portion supérieure tronconique 2a, comporte des moyens 7 aptes à diminuer l'intensité du rayon réfracté et/ou à modifier l'angle dudit rayon réfracté, la source de rayonnement incident étant extérieure à ladite préforme 1, ladite source de rayonnement incident n'étant pas représentée sur la [Fig.1] et lesdits moyens 7 étant schématiquement représentés par un traits plus épais.

De la même manière que précédemment, selon un premier mode de réalisation, en référence aux figures 4 et 2, lesdits moyens 7 consistent en au moins un état de surface de la paroi interne conique apte à diminuer le rayonnement réfracté. Dans cet exemple particulier de réalisation, ledit état de surface 7 consiste en une surface dépolie de ladite paroi interne conique.

De préférence, ladite surface dépolie de la paroi interne conique présente une rugosité comprise entre 0,1 et 1,5 µm. Par ailleurs, ladite surface dépolie de la paroi interne conique pourra être obtenu par tout procédé chimique, par exemple par application d'un acide, et/ou mécanique tel que par sablage par exemple, bien connu de l'homme du métier.

De plus, dans cet exemple particulier de réalisation, les moyens 7 aptes à diminuer l'intensité du rayon réfracté, en l'espèce ladite surface dépolie, de ladite paroi interne conique s'étendent sur toute la hauteur de cône Hc ; Toutefois, il est bien évident que lesdits moyens 7 pourront s'étendre uniquement sur une partie de la dite hauteur Hc, en continu ou non, sans pour autant sortir du cadre de l'invention.

Il va de soi que la surface dépolie 7 pourra être substituée par tous autres moyens aptes diminuer l'intensité du rayon réfracté sans pour autant sortir du cadre de l'invention.

Selon un second mode de réalisation, en référence aux figures 4 et 3, lesdits moyens 7 consistent en au moins un état de surface de la paroi interne conique à modifier l'angle dudit rayon réfracté de ladite paroi interne conique. Dans cet exemple particulier de réalisation, ledit état de surface 7 consiste en une surface à échelons 8 de la paroi interne conique, chaque échelon 8 comportant deux segments 8a et 8b.

Plus particulièrement, dans cet exemple particulier de réalisation, chaque échelon 8 comporte deux segments 8a et 8b s'étendant sensiblement perpendiculairement l'un par rapport à l'autre, un premier segment 8a s'étendant sensiblement perpendiculairement à l'axe X de révolution de la préforme 1 et un second segment 8b s'étendant sensiblement parallèlement à l'axe de révolution, que segment 8a,8b de chaque échelon 8 étant plan.

Il est bien évident que lesdits segments 8a et 8b de chaque échelon 8 pourront ne pas s'étendre perpendiculairement l'un par rapport à l'autre et/ou ne pas s'étendre perpendiculairement et respectivement perpendiculairement à l'axe X de révolution de la préforme sans pour autant sortir du cadre de l'invention.

Par ailleurs, il va de soi qu'au moins un segment de chaque échelon 8 pourra être concave ou convexe sans pour autant sortir du cadre de l'invention.

De plus, dans cet exemple particulier de réalisation, les moyens 7 aptes à modifier l'angle dudit rayon réfracté de ladite paroi interne conique s'étendent sur toute la hauteur de cône Hc ; Toutefois, il est bien évident que lesdits moyens 7 pourront s'étendre uniquement sur une partie de la dite hauteur Hc, en continu ou non, sans pour autant sortir du cadre de l'invention.

Il va de soi que la surface à échelons 8 de la paroi interne conique, qui est similaire à une lentille de Fresnel, pourra être substituée par tous moyens aptes à modifier l'angle dudit rayon réfracté sans pour autant sortir du cadre de l'invention.

Il convient de noter que la paroi interne conique pourra comprendre simultanément une surface à échelons 8 et une surface dépolie afin de diminuer l'intensité du rayon réfracté et modifier l'angle dudit rayon réfracté.

De plus, on observera que la paroi externe conique du corps de la préforme 1, i.e. la paroi externe du corps 2 de la préforme 1 au niveau de la portion supérieure conique 2a, pourra également comporter des moyens aptes à diminuer l'intensité du rayon réfracté et/ou à modifier l'angle dudit rayon réfracté tels que décrits précédemment.

Ainsi, ladite paroi externe conique et/ou ladite paroi interne conique pourra comporter, sur tout ou partie de ladite hauteur de cône Hc, des moyens aptes à diminuer l'intensité du rayon réfracté et/ou à modifier l'angle dudit rayon réfracté.

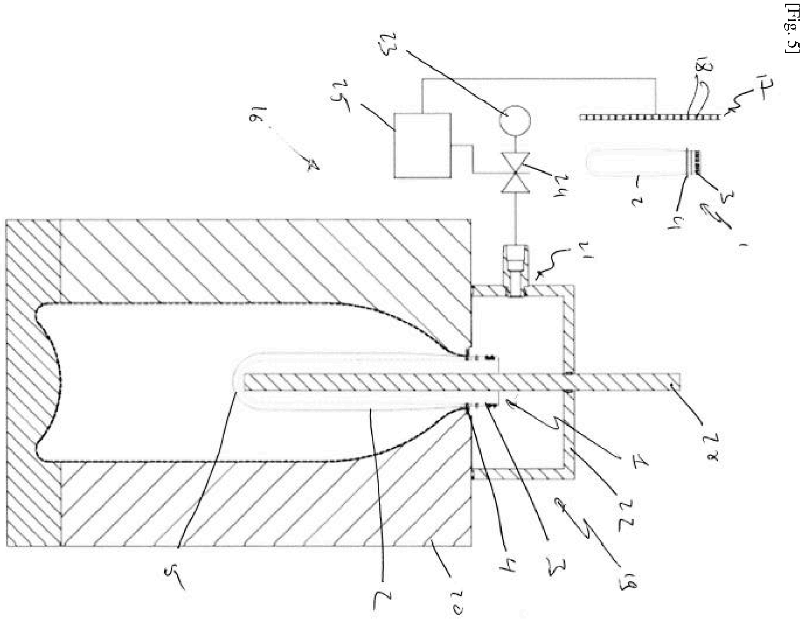

Par ailleurs, on a très schématiquement représenté sur la [Fig.5] une installation 16 pour la fabrication d'un récipient à partir d'une préforme 1 telle que décrite précédemment.

Cette installation 16 comprend une unité 17 de chauffe pourvue d'une pluralité de sources 18 de rayonnement électromagnétique monochromatique ou quasi-monochromatique dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale.

Les sources 18 sont de préférence organisées en matrice ; il s'agit par exemple de diodes laser de type VCSEL, émettant chacune un rayonnement d'une puissance de quelques dizaines de milliwatts à une longueur d'onde de l'ordre de 1 µm.

L'installation 16 comprend également une unité 19 de formage incluant au moins un moule 20 à l'empreinte du récipient. En pratique, l'unité 19 de formage peut comprendre une série de moules 20 montés sur un carrousel tournant. L'unité de formage 19 comprend, pour chaque moule, un dispositif 21 d'injection comprenant une tuyère 22 apte à être appliquée de manière étanche contre une face supérieure du moule 20 et reliée à une source 23 de fluide sous pression (par ex. de l'air) via un distributeur 24 (par ex. une électrovanne). L'installation comprend en outre une unité 25 de contrôle reliée aux sources 23 et au distributeur 24 pour en commander respectivement le réglage de pression, leur ouverture et leur fermeture.

Dans l'exemple illustré, l'unité 19 de formage comprend en outre, pour chaque moule 20, une tige 26 montée coulissante par rapport au moule 20 pour assurer, en même temps que le soufflage, un étirage de la préforme 1.

Ainsi, pour former un récipient, on procède comme suit.

On commence par fournir une préforme 1 telle que décrite précédemment, à partir d'un conteneur par exemple, dans lequel sont stockées des préformes toutes identiques.

Le corps 2 et le fond 5 de la préforme 1 sont alors chauffés au sein de l'unité 17 de chauffe par exposition à un rayonnement infrarouge monochromatique ou quasi-monochromatique d'intensité prédéterminée émis par les sources 18. Pendant la chauffe, la préforme 1 est mis en rotation autour de son axe X afin d'assurer une exposition homogène de son corps 2 et de son fond 5 au rayonnement.

Compte tenu de sa forme et de son dimensionnement, tels que décrit ci-dessus, on observe que la préforme 1 réfracte peu le rayonnement qu'elle reçoit. Il en résulte une meilleure distribution énergétique dans la matière, un meilleur contrôle de la chauffe, et une meilleure correspondance entre le profil de puissance réglé au niveau des sources 18, et le profil thermique constaté (par ex. au moyen d'une caméra thermique) sur la préforme 1.

Puis la préforme 1 ainsi chauffée est introduite dans le moule 20 et le récipient est formé injection dans la préforme 1 d'un fluide sous pression (par ex. de l'air) en provenance de la source 23.

Le formage par injection peut comprendre une étape d'étirage axial de la préforme 1 à l'aide d'une tige (cf. la tige 26 sur la [Fig.5]).

En variante, le formage pourrait être conduit librement, c'est-à-dire sans moule.

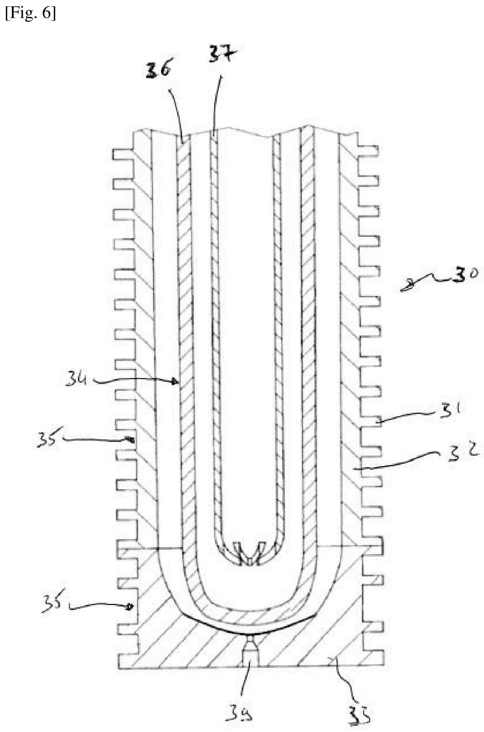

Par ailleurs, on a partiellement représenté sur la [Fig.6] un moule 30 pour le formage d'une préforme 1 telle que décrite précédemment.

Plus précisément, le moule 30 illustré est avantageusement conçu pour permettre la fabrication de la préforme 1 illustrée sur la [Fig.1], par simple injection d'une matière plastique (typiquement du PET et/ou du rPET). Un tel moule 30 comprend, d'une part, un corps 31 de moule ayant une paroi 32 latérale à l'empreinte de la face externe de la préforme 1 au niveau du corps 2 et un fond 33 de moule à l'empreinte de la face externe de la préforme 1 au niveau du fond 7, et, d'autre part, un noyau 34 à l'empreinte de la face interne de la préforme 1.

Le corps 31 de moule et le fond 33 de moule sont fixes, tandis que le noyau 34 est mobile en translation par rapport à ceux-ci pour permettre l'évacuation et le dévêtissement de la préforme 1 une fois formée.

Comme on le voit sur la [Fig.6], la paroi 32 latérale et le fond 33 de moule sont pourvus, sur leur périphérie, de rainures 35 formant, avec une coque externe (non représentée) des conduits de circulation d'un fluide frigorigène (tel que de l'eau) destiné à assurer le refroidissement, par sa face externe, de la préforme 1 immédiatement après son formage.

Comme on le voit également sur la [Fig.6], le noyau 34 est pourvu d'une enveloppe 36 externe creuse à l'empreinte de la face interne de la préforme 1, et d'un injecteur 37 central, également creux, pourvu à une extrémité inférieure d'échancrures 38. Un fluide frigorigène (tel que de l'eau), introduit dans l'injecteur 37, passe par les échancrures 38 et circule entre l'injecteur 37 et l'enveloppe 36 pour réguler la température de celle-ci à une valeur modérée et ainsi assurer le refroidissement, par sa face interne, de la préforme 1 immédiatement après son formage.

La matière (par ex. du PET et/ou du rPET) est introduite sous forme fondue, au moyen d'un dispositif d'injection (non représenté) par un trou 29 percé au centre du fond 33 de moule.

De manière avantageuse, la paroi du moule 35 et/ou la paroi externe de l'enveloppe externe du noyau 34 comportent un état de surface permettant d'obtenir des moyens aptes à diminuer l'intensité du rayon réfracté et/ou à modifier l'angle dudit rayon réfracté sur la paroi externe conique et/ou respectivement la paroi interne conique des préformes 1.

On observera que, en variante, on peut imaginer de former la préforme 1 par d'autres techniques que l'injection simple, notamment l'injection-compression.

Enfin, il est bien évident que les exemples que l'on vient de donner ne sont que des illustrations particulières en aucun cas limitatives quant aux domaines d'application de l'invention.

## Revendications

1. Préforme (1) pour la fabrication de récipients par étirage-soufflage, en matière plastique, comprenant au moins un corps (2) symétrique de révolution autour d'un axe (X) central vertical, ledit corps (2) comportant une paroi externe et une paroi interne, la distance radiale entre la paroi externe et la paroi interne définissant une épaisseur de paroi, un col (3) ouvert qui s'étend dans le prolongement du corps (2) à partir d'une extrémité supérieure de celui-ci, ledit col (3) étant séparé du corps (2) par une collerette (4) annulaire, et un fond (5) qui ferme le corps (2) à partir d'une extrémité (6) inférieure de ce dernier, ledit fond (5) étant symétrique de révolution autour de l'axe (X) central, et ledit corps (2) comportant, sur une hauteur dite de cône Hc depuis la collerette (4) annulaire en direction du fond (5), une paroi externe conique et/ou une paroi interne conique, caractérisé e en ce que ladite paroi externe conique et/ou ladite paroi interne conique comporte, sur tout ou partie de ladite hauteur de cône Hc, des moyens (7) aptes à diminuer l'intensité du rayon réfracté et/ou à modifier l'angle dudit rayon réfracté, la source de rayonnement incident étant extérieure à ladite préforme (1).

2. Préforme suivant la revendication 1 caractérisé e en ce que lesdits moyens (7) aptes à diminuer le rayonnement réfracté et/ou modifier l'angle du rayon réfracté consistent en au moins un état de surface de la paroi externe conique et/ou de la paroi interne conique.

3. Préforme suivant la revendication 2 caractérisé e en ce que ledit état de surface de la paroi externe conique et/ou de la paroi interne conique consiste en une surface dépolie de la paroi externe conique et/ou de la paroi interne conique.

4. Préforme suivant la revendication 3 **caractérisée en ce que** la surface dépolie de la paroi externe conique et/ou de la paroi interne conique présente une rugosité comprise entre 0,1 et 1,5 µm.

5. Préforme suivant l'une quelconque des revendications 2 à 4 **caractérisé e** en ce que ledit état de surface de la paroi externe conique et/ou de la paroi interne conique consiste en une surface à échelons (8) de la paroi externe conique et/ou de la paroi interne conique, chaque échelon (8) comportant deux segments (8a,8b).

6. Préforme suivant la revendication 5 **caractérisée en ce que** chaque échelon (8) comporte deux segments (8a,8b) s'étendant sensiblement perpendiculairement l'un par rapport à l'autre.

7. Préforme suivant la revendication 5 **caractérisée en ce que** chaque échelon (8) comporte deux segments (8a,8b) s'étendant sensiblement perpendiculairement l'un par rapport à l'autre, un premier segment (8a) s'étendant sensiblement perpendiculairement à l'axe (X) de révolution de la préforme (1) et un second segment (8b) s'étendant sensiblement parallèlement à l'axe (X) de révolution.

8. Préforme suivant l'une quelconque des revendications 5 à 7 **caractérisée en ce que** chaque segment (8a,8b) de chaque échelon (8) est plan.

9. Préforme suivant l'une quelconque des revendications 5 à 7 **caractérisée en ce qu'**au moins un segment (8a,8b) de chaque échelon (8) est concave ou convexe.

10. Préforme suivant l'une quelconque des revendications 1 à 9 **caractérisée en ce que** les moyens (7) aptes à diminuer l'intensité du rayon réfracté et/ou à modifier l'angle dudit rayon réfracté de ladite paroi externe conique et/ou ladite paroi interne conique s'étendent sur toute la hauteur de cône Hc.

11. Procédé de fabrication d'un récipient par soufflage ou par étirage-soufflage comprenant au moins les étapes suivantes de :
- Fourniture d'une préforme selon l'une quelconque des revendications 1 à 10 ;
- Chauffe du corps de la préforme par exposition à un rayonnement infrarouge monochromatique ou quasi-monochromatique d'intensité prédéterminée ; et
- Formage du récipient par injection d'un fluide sous pression dans la préforme ainsi préalablement chauffée.

12. Procédé selon la revendication 11 **caractérisé en ce qu'**il comprend, entre l'étape de chauffe et l'étape de formage, une étape d'introduction de la préforme dans un moule à l'empreinte du récipient.

13. Moule pour le formage d'une préforme selon l'une quelconque des revendications 1 à 10 comprenant un corps (31) de moule ayant une paroi latérale à l'empreinte d'une face externe du corps (2) de la préforme (1) et un fond (33) de moule à l'empreinte d'une face externe du fond de la préforme (1) et un noyau (34) à l'empreinte d'une face interne de la préforme (1).
